# EUROPÄISCHE PATENTSCHRIFT

(11) **EP 1 415 777 B1**
(45) Veröffentlichungstag und Bekanntmachung des Hinweises auf die Patenterteilung: **20.12.2006**
(21) Anmeldenummer: 02024486.9
(22) Anmeldetag: 30.10.2002
(51) Int. Cl.: B27G 13/08, B23Q 11/00

(54) **Bearbeitungswerkzeug**
Machining tool
Outil pour l'usinage

(43) Veröffentlichungstag der Anmeldung: 06.05.2004
(73) Patentinhaber: Ledermann GmbH & Co. KG, 72160 Horb (DE)
(72) Erfinder: Vöge, Rüdiger, 72108 Rottenburg (DE)
(74) Vertreter: HOFFMANN EITLE

(56) Entgegenhaltungen:
- DE-A- 19 711 938
- DE-A- 19 858 210
- DE-A- 19 950 722
- DE-C- 19 925 478
- DE-U- 29 923 867
- US-B1- 6 454 499

## Beschreibung

### Technisches Gebiet

Die vorliegende Erfindung betrifft ein Bearbeitungswerkzeug zur spanabhebenden Bearbeitung von Werkstücken aus Holz, Kunststoff oder dergleichen, das einen Werkzeugkörper mit mindestens einer Schneide, einem Spanabfuhrkanal und einem Spanabfuhrraum aufweist, nach dem Oberbegriff von Anspruch 1.

### Stand der Technik

Zur spanabhebenden Bearbeitung von Werkstücken aus Holz, Kunststoff oder dergleichen werden üblicherweise Bearbeitungswerkzeuge eingesetzt, die um eine Rotationsachse rotieren und an ihrem äußeren Umfang mindestens eine Schneide zur Bearbeitung des Werkstückes während der Rotation des Werkzeuges aufweisen.

Ein derartiges Werkzeug ist beispielsweise aus der EP 0 072 642 A3 bekannt. Diese offenbart ein kreisförmiges Sägeblatt, das eine Vielzahl von in Umfangsrichtung beabstandeten Schneidzähnen besitzt. Von diesen erstrecken sich jeweils Spanabfuhrkanäle radial nach innen, die wiederum in Spanabfuhrräumen münden.

Um die bei der Bearbeitung derartiger Werkzeuge auftretendenden Späne aufzunehmen ist es bekannt, eine Absaugvorrichtung vorzusehen. Allerdings treten bei den bekanten Werkzeugen, wie beispielsweise demjenigen der obigen EP 0 072 642 A3, die Späne in verschiedenen Richtungen aus, so dass die Absaugvorrichtung nicht alle Späne erfassen kann und somit ein wirksames und weitgehend vollständiges Absaugen und Beseitigen der Späne nicht möglich ist.

Dementsprechend verbleiben Späne im Arbeitsbereich, was eine Reihe von Nachteilen mit sich bringt. So werden die Späne teilweise mehrfach durch die Schneide des Werkzeuges geschnitten, was einen erhöhten Verschleiß des Werkzeuges bzw. der Schneide mit sich bringt und deren Lebensdauer vermindert. Auch können Späne auf der bearbeiteten Werkstückoberfläche zurückbleiben, was zusätzlichen Reinigungsaufwand verursacht und auch zu Eindrückspuren von Spänen an der bearbeiteten Werkstückoberfläche führen kann. Weiterhin ist die Problematik bekannt, dass bei verklebten Werkstoffen häufig ein Gemisch aus Kleber und Spänen entsteht, das zu Verklumpungen führen kann, wodurch die gesamte Spanabfuhr stark beeinträchtigt wird.

Darüber hinaus offenbart die DE 200 19 885 U1 ein Fräswerkzeug mit schrägen, offenen Spanräumen für die spanende Bearbeitung von Holz und dergleichen. Beim Austritt der Schneiden und des Spanraumes des Werkzeuges aus dem Werkstück werden die Späne im wesentlichen tangential zur Außenkontur des Wergzeuges mit einem vergleichsweise großen Streuband ausgeworfen, so dass das Erfassen der Späne mittels einer Absaugvorrichtung weiterhin schwierig bzw. wenig effizient ist.

Ferner offenbart die DE 198 58 210 A ein Bearbeitungswerkzeug nach dem Oberbegriff von Anspruch 1.

### Darstellung der Erfindung

Es ist daher Ausgabe der vorliegenden Erfindung, ein Werkzeug zur spanabhebenden Bearbeitung von Werkstücken aus Holz, Kunststoff oder dergleichen bereitzustellen, das ein konzentrierteres Austreten der Späne aus dem Werkzeug und somit ein effizienteres Beseitigen, insbesondere Absaugen der Späne ermöglicht.

Diese Aufgabe wird erfindungsgemäß durch das Werkzeug zur spanabhebenden Bearbeitung von Werkstücken gemäß Anspruch 1 und das Bearbeitungsaggregat zur spanabhebenden Bearbeitung von Werkstücken gemäß Anspruch 6 gelöst.

Der vorliegenden Erfindung liegt der Gedanke zugrunde, dass die Innenkontur des Spanabfuhrraumes derart abgestimmt ist, dass die an der Scheide entstehenden Späne gesammelt werden und entlang der Innenkontur des Spanabfuhrraumes geführt werden, um schließlich strahlartig aus der Seitenfläche des Werkzeuges auszutreten. Diese Funktion wird zunächst durch das Merkmal von Anspruch 1 erreicht, wonach sich der Querschnitt des Spanabfuhrraumes in Richtung der Rotationsachse zu der mindestens einen Seitenfläche hin zumindest abschnittsweise erweitert. Mit Querschnitt wird dabei die Fläche bezeichnet, die von dem Spanabfuhrraum in Schnitten im wesentlichen senkrecht zur Rotationsachse des Bearbeitungswerkzeuges umschlossen wird.

Die mit der Erfindung erzielten Vorteile bestehen beispielsweise darin, dass die Späne vergleichsweise konzentriert aus dem Werkzeug austreten, wobei die Austrittsrichtung im wesentlichen senkrecht zu der Seitenfläche ist. Auf diese Weise kann eine sehr effiziente Beseitigung bzw. Absaugung der Späne, beispielsweise mittels einer Absaugvorrichtung erzielt werden. Daraus ergibt sich, dass durch die Späne hervorgerufene, schädliche Einflüsse minimiert werden können. So wird die Lebensdauer des Werkzeuges bzw. der Schneide erhöht, da ein mehrfaches Schneiden der Späne weitgehend vermieden werden kann. Darüber hinaus werden Spanrückstände auf der Werkstückoberfläche weitgehend vermieden, was eine nachträgliche Reinigung des Werkstücks überflüssig macht. Schließlich wird die Arbeitsumgebung, insbesondere Maschinenteile und dergleichen, weniger verunreinigt, was den Reinigungsaufwand vermindert und eine Beeinträchtigung beispielsweise von Maschinenteilen verhindert.

Um eine einfache und kostengünstige Herstellung des erfindungsgemäßen Bearbeitungswerkzeuges sicherzustellen, ist gemäß der vorliegenden Erfindung der Querschnitt des Spanabfuhrraumes im wesentlichen kreisförmig, wobei die Kontur des Spanabfuhrraumes im wesentlichen einem Rotationskörper oder einem Teil desselben entspricht, insbesondere einem Kegel oder einem Rotationsparaboloid. Durch den kreisförmigen Querschnitt bzw. die rotationssymmetrische Kontur wird die Herstellung vereinfacht, da der Spanraum problemlos mittels eines einfachen Fräsers, beispielsweise eines Konusfräsers in den Werkzeugkörper eingebracht werden kann. Gleichzeitig wird sichergestellt, dass die Späne erfindungsgemäß kontinuierlich zu der Seitenfläche hingeführt werden, um dort konzentriert aus dem Werkzeug auszutreten.

Im Hinblick auf den Austrittswinkel der Späne aus der Seitenfläche des Werkzeugkörpers ist erfindungsgemäß vorgesehen, dass die Rotationsachse des die Kontur des Spanabfuhrraumes bildenden Rotationskörpers gegenüber der Rotationsachse des Werkzeugkörpers geneigt ist. Hierdurch können die austretenden Späne in eine gewünschte Richtung gelenkt werden, die bevorzugt mit der Richtung übereinstimmt, in der eine entsprechende Absaugvorrichtung für die Späne angeordnet ist.

Gemäß einer bevorzugten Ausführungsform der vorliegenden Erfindung ist der Querschnitt des Spanabfuhrkanals gegenüber dem Querschnitt des Spanabfuhrraumes verengt. Hierdurch wird sichergestellt, dass Späne, die in den Spanabfuhrraum gelangt sind, nicht durch Zentrifugalkräfte wieder radial nach außen geschleudert werden, sondern planmäßig in der Seitenfläche des Werkzeugkörpers austreten. Auf diese Weise werden die oben genannten Wirkungen und Vorteile weiter verstärkt.

Dabei ist es insbesondere vorteilhaft, wenn die Rotationsachse des Rotationskörpers gegenüber der Rotationsachse des Werkzeugkörpers derart geneigt ist, dass die in Rotationsrichtung des Werkzeugkörpers hinten liegende Wandung des Spanabfuhrraumes einen größeren Winkel gegenüber der Rotationsachse des Werkzeugkörpers einnimmt als die in Rotationsrichtung des Werkzeugkörpers vorne liegende Wandung des Spanabfuhrraumes. Hierdurch wird erreicht, dass die Austrittsrichtung der Späne aus der Seitenfläche sich der Erstreckungsrichtung der Werkzeugachse annähert. Gleichzeitig ist diese Ausbildung des Spanabfuhrraumes leicht durch eine Schrägstellung des Fräswerkzeuges bei der Herstellung des Spanabfuhrraumes realisierbar.

Um ein Austreten der Späne im wesentlichen senkrecht zu der Seitenfläche bzw. im wesentlichen parallel zu der Werkzeugachse zu erreichen, ist es gemäß einer Weiterbildung der vorliegenden Erfindung bevorzugt, dass die Wandung des Spanabfuhrraumes im an die Seitenfläche angrenzenden Bereich im wesentlichen parallel zur Rotationsachse ist, d. h. sich der Querschnitt hier nicht mehr erweitert. Diese Konfiguration ist besonders vorteilhaft, wenn die Absaugvorrichtung für die Späne koaxial mit der Werkzeugachse angeordnet ist, da die Späne dann direkt in Richtung der Absaugvorrichtung gelenkt werden.

Trotz der vorteilhaften Ausbildung des erfindungsgemäßen Bearbeitungswerkzeuges können in machen Fällen in geringem Umfang Späne von der gewünschten Austrittsrichtung abweichen. Daher sieht eine vorteilhafte Weiterbildung der vorliegenden Erfindung vor, umlaufender Vorsprung vorgesehen ist, der die Öffnung des mindestens einen Spanabfuhrraumes umschließt. Auf diese Weise wird eine ungewünschte Ausbreitung der Späne weiter reduziert, insbesondere in Verbindung mit einer geeigneten Absaugvorrichtung, welche auf den umlaufenden Vorsprung abgestimmt ist.

Dementsprechend sieht eine bevorzugte Weiterbildung der Erfindung ein Bearbeitungsaggregat zur Bearbeitung von Werkstücken aus Holz, Kunststoff oder dergleichen vor, das ein erfindungsgemäßes Bearbeitungswerkzeug und eine Absaugvorrichtung aufweist, die koaxial zu dem Werkzeug angeordnet ist und eine Absaugöffnung besitzt, wobei die Absaugöffnung der Seitenfläche des Werkzeuges zugewandt ist. Mit dieser erfindungsgemäßen Konfiguration wird ein Bearbeitungsaggregat bereitgestellt, das die oben beschriebenen Vorteile des erfindungsgemäßen Bearbeitungswerkzeuges fortbildet und eine einfache Konstruktion des Bearbeitungsaggregats ermöglicht.

Dabei wird eine besonders hohe Absaugrate an Spänen gemäß einer bevorzugten Ausführungsform des Bearbeitungsaggregats dadurch erreicht, dass die Absaugöffnung der Absaugvorrichtung den Vorsprung auf der Seitenfläche des Werkzeuges zumindest teilweise umschließt.

### Kurze Beschreibung der zeichnungen

Im Folgenden wird unter Bezugnahme auf die beigefügten Zeichnungen die vorliegende Erfindung näher erläutert und beschrieben. Es zeigen:
- Fig. 1a: eine schematische Seitenansicht einer Ausführungsform des erfindungsgemäßen Bearbeitungswerkzeuges;
- Fig. 1b: eine schematische Draufsicht der Ausführungsform des erfindungsgemäßen Bearbeitungswerkzeuges;
- Fig. 2: eine schematische Perspektivansicht der Ausführungsform des erfindungsgemäßen Bearbeitungswerkzeuges;
- Fig. 3: eine weitere schematische Perspektivansicht der Ausführungsform des erfindungsgemäßen Bearbeitungswerkzeuges;
- Fig. 4: eine schematische Teilansicht eines Bearbeitungsaggregats mit einem Bearbeitungswerkzeug und einer Absaugvorrichtung.

### Ausführliche Beschreibung bevorzugter Ausführungsformen

Eine bevorzugte Ausführungsform der vorliegenden Erfindung wird nachfolgend beispielhaft unter Bezugnahme auf die begleitenden Zeichnungen beschrieben.

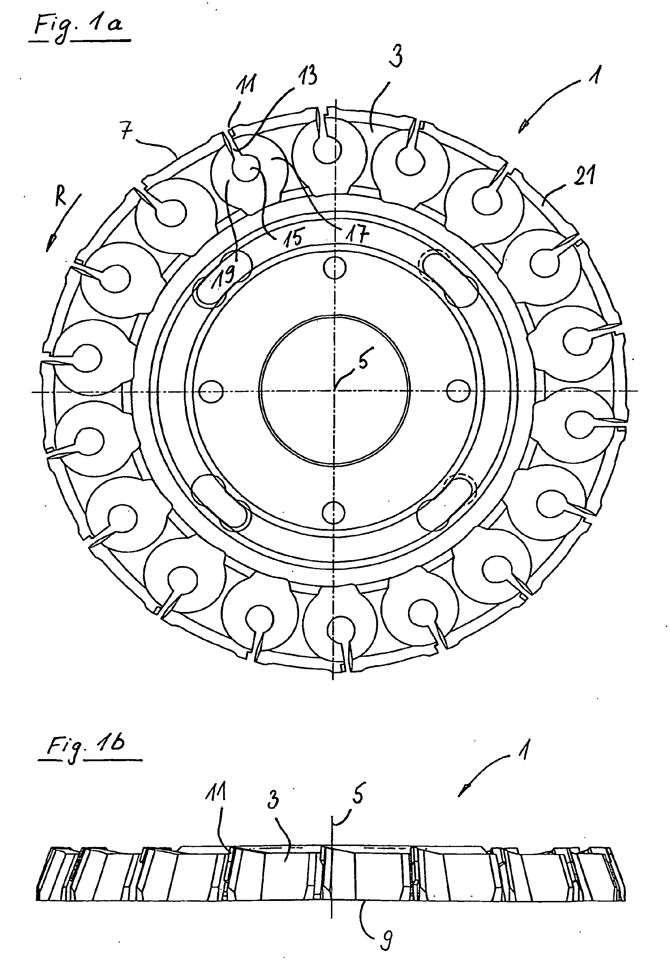

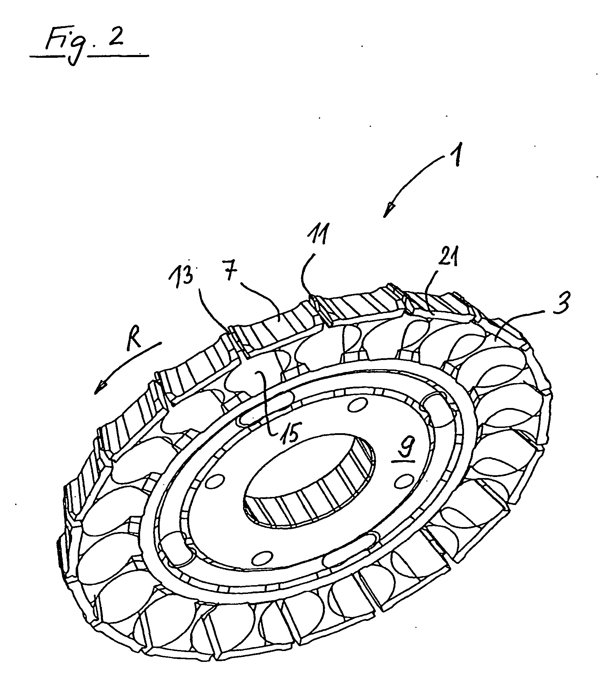

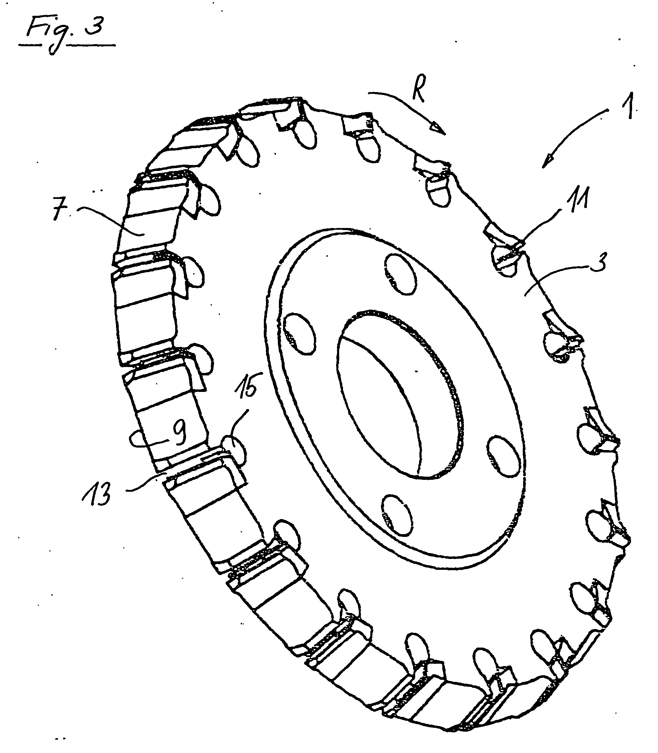

Die Figuren 1 bis 3 zeigen ein Bearbeitungswerkzeug 1 zur spanabhebenden Bearbeitung von Werkstücken aus Holz, Kunststoff oder dergleichen. Das Bearbeitungswerkzeug 1 besitzt einen Werkzeugkörper 3, der um eine Rotationsachse 5 drehbar ist und einen äußeren Umfang 7 sowie eine Seitenfläche 9 besitzt. Entlang des äußeren Umfangs 7 weist der Werkzeugkörper 3 eine Mehrzahl an Schneiden 11 auf, wobei im vorliegenden Ausführungsbeispiel 18 Schneiden vorgesehen sind. Es ist jedoch im Rahmen der vorliegenden Erfindung selbstverständlich auch möglich, dass der Werkzeugkörper 3 lediglich eine Schneide oder auch mehr als 18 Schneiden besitzt.

Von jeder Schneide 11 erstreckt sich jeweils ein Spanabfuhrkanal 13, der in dem Werkzeugkörper 3 vorgesehen ist, im Wesentlichen radial nach innen. Die Spanabfuhrkanäle 13 münden jeweils in einem Spanabfuhrraum 15, der ebenfalls in dem Werkzeugkörper 3 vorgesehen ist und zu einer Seitenfläche 9 des Werkzeugkörpers 3 hin offen ist. Wie in Fig. 1a am besten zu erkennen ist, erweitert sich der Querschnitt des Spanabfuhrraumes 15 in Richtung der senkrecht zu der Zeichenebene stehenden Rotationsachse 5 zu der Seitenfläche 9 hin. Genauer gesagt besitzt der Spanabfuhrraum 15 in der vorliegenden Ausführungsform eine konische Form. Es ist jedoch selbstverständlich, dass der Spanabfuhrraum auch eine beliebige andere Form besitzen kann sofern sich der Querschnitt des Spanabfuhrraumes 15 erfindungsgemäß in Richtung der Rotationsachse 5 zu der mindestens einen Seitenfläche 9 hin zumindest abschnittsweise erweitert. Mit Querschnitt wird dabei die Fläche bezeichnet, die von dem Spanabfuhrraum 15 in Schnitten im Wesentlichen senkrecht zur Rotationsachse 5 des Werkzeugkörpers 3 umschlossen wird.

Wie in den Figuren 1 bis 3 ebenfalls deutlich zu erkennen ist, ist der Querschnitt des Spanabfuhrkanals 13 gegenüber demjenigen des Spanabfuhrraumes 15 verengt, sodass Späne, die von dem Spanabfuhrkanal 13 in den Spanabfuhrraum 15 gelangt sind, durch die Zentrifugalkraft möglichst nicht mehr radial nach außen getragen werden.

Obwohl in den Figuren nicht dargestellt, ist es gemäß einer alternativen Ausführungsform des erfindungsgemäßen Bearbeitungswerkzeugs bevorzugt, dass die Rotationsachse des Spanabfuhrraumes 15, der im vorliegenden Ausführungsbeispiel wie oben erwähnt ein konischer Rotationskörper ist, gegenüber der Rotationsachse 5 des Werkzeugkörpers 3 geneigt ist. Im Hinblick auf einen vorteilhaften Auswurf der Späne aus dem Spanabfuhrraum 15 ist es dabei vorteilhaft und bevorzugt, dass die in Rotationsrichtung R des Werkzeugkörpers 3 hinten liegende Wandung 17 des Spanabfuhrraumes 15 einen größeren Winkel gegenüber der Rotationsachse 5 des Werkzeugkörpers 3 einnimmt, als die in Rotationsrichtung R des Werkzeugkörpers 3 vorne liegende Wandung 19 des Spanabfuhrraumes 15. Durch Einstellen eines geeigneten Neigungswinkels kann die Austrittsrichtung der Späne aus dem Bearbeitungswerkzeug optimal nach den jeweiligen Anforderungen eingestellt werden.

Ferner besitzt das in den Figuren 1 bis 3 dargestellte Bearbeitungswerkzeug 1 bzw. der Werkzeugkörper 3 auf der Seitenfläche 9 einen umlaufenden Vorsprung 21, der zwar durch die Spanabfuhrkanäle 13 unterbrochen ist, im Übrigen jedoch die Spannabfuhrräume 15 umschließt.

Während des Einsatzes des erfindungsgemäßen Bearbeitungswerkzeugs 1 werden mittels der Schneiden 11 Späne von dem bearbeiteten Werkstück abgetragen und über den Spanabfuhrkanal 13 in den Spanabfuhrraum 15 gefördert. Im Spanabfuhrraum 15 treffen die Späne auf dessen Wandungen. Durch die Neigungen der Wandungen bzw. den sich zu der Seitenfläche 9 hin erweiterten Querschnitt des Spanabfuhrraumes werden die Späne kontinuierlich zu der Seitenfläche 9 hingefördert, um schließlich im Wesentlichen senkrecht zu der Seitenfläche 9 aus dem Spanabfuhrraum 15 auszutreten.

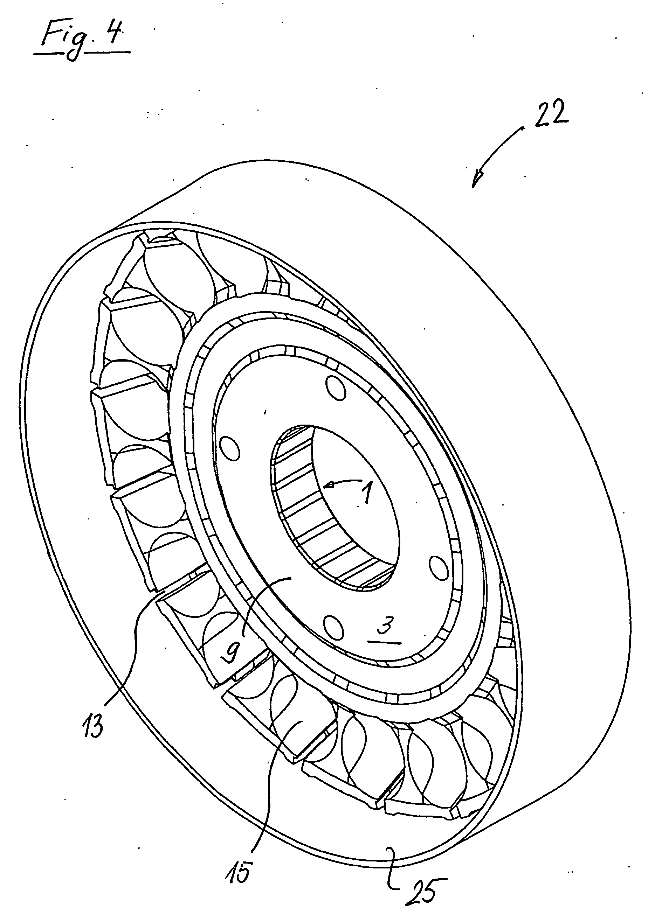

Die austretenden Späne lassen sich nun besonders vorteilhaft mit einer Absaugvorrichtung aufnehmen. Zu diesem Zweck stellt die vorliegende Erfindung auch ein ganzheitliches Bearbeitungsaggregat bereit, wobei eine Ausführungsform davon in Fig. 4 schematisch und teilweise dargestellt ist. Das in Fig. 4 dargestellte Bearbeitungsaggregat 22 umfasst neben dem Bearbeitungswerkzeug 1 wie vorstehend beschrieben eine Absaugvorrichtung, die koaxial zu dem Werkzeug angeordnet ist und eine Absaugöffnung 25 besitzt. Bei der Absaugvorrichtung kann es sich prinzipiell um eine bekannte Vorrichtung zum Absaugen von Spänen oder dergleichen handeln, so dass der Einfachheit halber auf deren detaillierte Darstellung verzichtet wird. Erfindungsgemäß ist es jedoch entscheidend, dass die Absaugöffnung 25 der Absaugvorrichtung der Seitenfläche 9 des Werkzeuges 3 zugewandt ist. Hierdurch ergibt sich im Zusammenwirken mit dem erfindungsgemäßen Bearbeitungswerkzeug ein einfaches, jedoch hochwirksames Absaugen der bei der spanabhebenden Bearbeitung anfallenden Späne, so dass die oben genannten Vorteile des erfindungsgemäßen Bearbeitungswerkzeuges weiter vertieft werden.

Darüber hinaus ist die Absaugöffnung 25 in Fig. 4 derart angeordnet, dass sie den Vorsprung 21 auf der Seitenfläche 9 des Werkzeuges 3 weitgehend umschließt. Hierdurch wird der Anteil an Spänen, der möglicherweise nicht durch die Absaugvorrichtung erfasst wird, weiter minimiert.

Zusammenfassend wird mit diesem Bearbeitungsaggregat auf einfache, jedoch effiziente Weise sicher gestellt, dass die während der spanabhebenden Bearbeitung eines Werkstücks anfallenden Späne effizient beseitigt werden, sodass durch die Späne hervorgerufene, schädliche Einflüsse auf das Werkstück, das Werkzeug oder die gesamte Bearbeitungsvorrichtung minimiert werden können.

## Patentansprüche

1. Bearbeitungswerkzeug (1) zur spanabhebenden Bearbeitung von Werkstücken aus Holz, Kunststoff oder dergleichen, das aufweist:
einen Werkzeugkörper (3), der um eine Rotationsachse (5) in einer Rotationsebene drehbar ist und einen äußeren Umfang (7) sowie eine Seitenfläche (9) besitzt;
mindestens eine Schneide (11), die auf dem äußeren Umfang (7) des Werkszeugkörpers (3) angeordnet ist,
einen Spanabfuhrkanal (13), der in dem Werkzeugkörper (3) vorgesehen ist und sich von der mindestens einen Schneide (11) im wesentlichen radial nach innen erstreckt,
einen Spanabfuhrraum (15), der in dem Werkzeugkörper (3) vorgesehen, mit dem inneren Ende des Spanabfuhrkanals (13) verbunden und zu der Seitenfläche (9) hin offen ist, wobei
sich der Querschnitt des Spanabfuhrraumes (15) in Richtung der Rotationsachse (5) zu der mindestens einen Seitenfläche (9) hin zumindest abschnittsweise erweitert und die Kontur des Spanabfuhrraumes (15) im wesentlichen einem Rotationskörper oder einem Teil desselben entspricht, insbesondere einem Kegel oder einem Rotationsparaboloid,
**dadurch gekennzeichnet, dass**
die Rotationsachse des Rotationskörpers gegenüber der Rotationsachse (5) des Werkzeugkörpers (3) geneigt ist.

2. Bearbeitungswerkzeug nach Anspruch 1, **dadurch gekennzeichnet, dass** der Querschnitt des Spanabfuhrkanals (13) gegenüber dem Querschnitt des Spanabfuhrraumes (15) verengt ist.

3. Bearbeitungswerkzeug nach Anspruch 1 oder 2, **dadurch gekennzeichnet, dass** die Rotationsachse des Rotationskörpers gegenüber der Rotationsachse des Werkzeugkörpers (3) derart geneigt ist, dass die in Rotationsrichtung (R) des Werkzeugkörpers hinten liegende Wandung (17) des Spanabfuhrraumes einen größeren Winkel gegenüber der Rotationsachse des Werkzeugkörpers einnimmt als die in Rotationsrichtung (R) des Werkzeugkörpers vorne liegende Wandung (19) des Spanabfuhrraumes.

4. Bearbeitungswerkzeug nach einem der vorhergehenden Ansprüche, **dadurch gekennzeichnet, dass** die Wandung des Spanabfuhrraumes im an die Seitenfläche (9) angrenzenden Bereich im wesentlichen parallel zur Rotationsachse ist.

5. Bearbeitungswerkzeug nach einem der vorhergehenden Ansprüche, **dadurch gekennzeichnet, dass** auf der Seitenfläche (9) des Werkzeugkörpers (3) ein umlaufender Vorsprung (21) vorgesehen ist, der die Öffnung des mindestens einen Spanabfuhrraumes zumindest im wesentlichen umschließt.

6. Bearbeitungsaggregat (22) zur Bearbeitung von Werkstücken aus Holz, Kunststoff oder dergleichen, das aufweist:
ein Bearbeitungswerkzeug (1) nach einem der vorhergehenden Ansprüche, und
eine Absaugvorrichtung , die koaxial zu dem Werkzeug angeordnet ist und eine Absaugöffnung (25) besitzt,
wobei die Absaugöffnung (25) der Seitenfläche (9) des Werkzeuges (3) zugewandt ist.

7. Bearbeitungsaggregat nach Anspruch 6, **dadurch gekennzeichnet, dass** die Absaugöffnung (25) den Vorsprung (21) auf der Seitenfläche (9) des Werkzeuges (3) zumindest teilweise umschließt.

## Claims

1. Machining tool (1) for chip-removing machining of workpieces made of wood, plastic or the like comprising:
a tool member (3) which is rotatable in a plane of rotation about an axis of rotation (5) and possesses an outer circumference (7) as well as a lateral surface (9);
at least one cutting edge (11) which is arranged on the outer circumference (7) of the tool member (3),
a chip discharge channel (13) which is provided in the tool member (3) and extends substantially radially inwards from the at least single cutting edge (11),
a chip discharge chamber (15) which is provided in the tool member (3), is connected to the inner end of the chip discharge channel (13) and is open towards the lateral surface (9), wherein
the cross-section of the chip discharge chamber (15) widens at least in sections in the direction of the axis of rotation (5) towards the at least single lateral surface (9) and the contour of the chip discharge chamber (15) conforms substantially to a solid of revolution or a portion thereof, in particular a cone or a paraboloid of revolution,
**characterised in that**
the axis of rotation of the solid of revolution is inclined with respect to the axis of rotation (5) of the tool member (3).

2. Machining tool according to claim 1, **characterised in that** the cross-section of the chip discharge channel (13) is narrowed by comparison with the cross-section of the chip discharge chamber (15).

3. Machining tool according to claim 1 or 2, **characterised in that** the axis of rotation of the solid of revolution is inclined with respect to the axis of rotation of the tool member (3) in such a way that the wall (17) of the chip discharge chamber located behind in the direction of rotation (R) of the tool member assumes a greater angle with respect to axis of rotation of the tool member than the wall (19) of the chip discharge chamber located in front in the direction of rotation (R) of the tool member.

4. Machining tool according to any of the preceding claims, **characterised in that** the wall of the chip discharge chamber in the region adjoining the lateral surface (9) is substantially parallel to the axis of rotation.

5. Machining tool according to any of the preceding claims, **characterised in that** on the lateral surface (9) of the tool member (3) an all-round projection (21) is provided which at least substantially encloses the opening of the at least single chip discharge chamber.

6. Machining unit (22) for machining workpieces made of wood, plastic or the like comprising:
a machining tool (1) according to any of the preceding claims and
a vacuum extraction device which is arranged coaxially to the tool and possesses an extraction opening (25),
wherein the extraction opening (25) is facing towards the lateral surface (9) of the tool (3).

7. Machining unit according to claim 6, **characterised in that** the extraction opening (25) at least partially encloses the projection (21) on the lateral surface (9) of the tool (3).

## Revendications

1. Outil d'usinage (1) pour l'usinage par enlèvement de matière de pièces à oeuvrer en bois, en matière plastique ou similaire, qui comprend :
un corps d'outil (3), pivotable autour d'un axe de rotation (5) dans un plan de rotation, et possédant une périphérie extérieure (7) ainsi qu'une surface latérale (9) ;
au moins un tranchant (11) qui est agencé sur la périphérie extérieure (7) du corps d'outil (3) ;
un canal d'évacuation de copeaux (13), qui est prévu dans le corps d'outil (3) et qui s'étend essentiellement radialement vers l'intérieur depuis ledit au moins un tranchant (11) ;
une chambre d'évacuation de copeaux (15), qui est prévue dans le corps d'outil (3), qui est reliée à l'extrémité intérieure du canal d'évacuation de copeaux (13), et qui est ouverte vers la surface latérale (9),
dans lequel la section transversale de la chambre d'évacuation de copeaux (15) s'élargit au moins par tronçons en direction de l'axe de rotation (5) vers ladite au moins une surface latérale (9), et le contour de la chambre d'évacuation de copeaux (15) correspond essentiellement à un corps de révolution ou à une partie de celui-ci, en particulier un cône ou un paraboloide de révolution,
**caractérisé en ce que** l'axe de rotation du corps de révolution est incliné par rapport à l'axe de rotation (5) du corps d'outil (3).

2. Outil d'usinage selon la revendication 1, **caractérisé en ce que** la section transversale du canal d'évacuation de copeaux (13) est rétrécie par rapport à la section transversale de la chambre d'évacuation de copeaux (15).

3. Outil d'usinage selon la revendication 1 ou 2, **caractérisé en ce que** l'axe de rotation du corps de révolution est incliné par rapport à l'axe de rotation du corps d'outil (3) de telle façon que la paroi (17), qui se trouve en arrière en direction de rotation (R) du corps d'outil, de la chambre d'évacuation de copeaux, occupe un angle, par rapport à l'axe de rotation du corps d'outil, plus élevé que la paroi (19), située en avant dans la direction de rotation (R) du corps d'outil, de la chambre d'évacuation de copeaux.

4. Outil d'usinage selon l'une des revendications précédentes, **caractérisé en ce que** la paroi de la chambre d'évacuation d'outil est essentiellement parallèle à l'axe de rotation dans la zone adjacente à la surface latérale (9).

5. Outil d'usinage selon l'une des revendications précédentes, **caractérisé en ce qu'**il est prévu une saillie périphérique (21) sur la surface latérale (9) du corps d'outil (3), saillie qui entoure au moins essentiellement l'ouverture de ladite au moins une chambre d'évacuation de copeaux.

6. Groupe d'usinage (22) pour l'usinage de pièces à oeuvrer en bois, en matière plastique ou similaire, qui comprend :
un outil d'usinage (1) selon l'une des revendications précédentes, et
un dispositif d'aspiration qui est agencé coaxialement à l'outil et qui possède une ouverture d'aspiration (25),
dans lequel l'ouverture d'aspiration (25) est tournée vers la surface latérale (9) de l'outil (3).

7. Groupe d'usinage selon la revendication 6, **caractérisé en ce que** l'ouverture d'aspiration (25) entoure au moins partiellement la saillie (21) sur la surface latérale (9) de l'outil (3).
